# EUROPEAN PATENT SPECIFICATION

(11) **EP 0 665 047 B1**
(45) Date of publication and mention of the grant of the patent: **26.08.1998**
(21) Application number: 94600002.3
(22) Date of filing: 28.01.1994
(51) Int. Cl.: B01D 53/94, B01J 23/56, B01J 37/02

(54) **New three-way catalysts with PT, RH and PD, each supported on a separate support**
Dreiwegkatalysator mit Pt, Rh und Pd, alle mit separatem Träger
Catalyseur a trois voies avec Pt, Rh, et Pd, chacun sur support separé

(43) Date of publication of application: 02.08.1995
(73) Proprietor: Vayenas, Constantinos G., 263 31 Aroi, Patras (GR); Verykios, Xenophon E., Agios Basilios, Patras (GR); Yentekakis, Ioannis V., 264 41 Patras (GR); Papadakis, Evangelos G., 264 41 Patras (GR); Pliangos, Constantinos A., 132 31 Athens (GR)
(72) Inventor: Vayenas, Constantinos G., 263 31 Aroi, Patras (GR); Verykios, Xenophon E., Agios Basilios, Patras (GR); Yentekakis, Ioannis V., 264 41 Patras (GR); Papadakis, Evangelos G., 264 41 Patras (GR); Pliangos, Constantinos A., 132 31 Athens (GR)
(74) Representative: Argyriadis, Korinna

(56) References cited:
- EP-A- 0 387 611
- EP-A- 0 393 612
- EP-A- 0 443 765
- WO-A-93/09146
- FR-A- 2 595 265
- US-A- 5 232 890

## Description

This invention refers to a new monolithic three-way catalytic converter with optimized distribution of precious metals within three separate washcoat layers and to its application to automotive exhaust treatment and to the treament of industrial and power generation stations waste gases containing carbon monoxide, light hydrocarbons and nitrogen oxides. The new catalytic converter can be significantly more active and durable than the commercial ones and can thus require smaller quantities of noble metals. The activity of the catalyst is enhanced by application of two concepts, which recently have been developed in our laboratories: the phenomenon of Non-Faradaic Electrochemical Modification of Catalytic Activity (NEMCA) and the phenomenon of Dopant-Induced Metal Support Interactions (DIMSI). Thus, optimal pairs of precious metal-support materials are specified, which provide maximum activity. These are: Pt/γ-Al₂O₃, Rh/W⁶⁺-doped TiO₂ and Pd/ZrO₂(Y₂O₃). In addition, these slurries of optimal pairs of metal and support are loaded separately in a monolithic support, forming three washcoat layers; the first layer containing Pd, the intermediate containing Rh, and the upper layer containing Pt. This configuration provides high durability due to higher resistance to poisoning,(protection of Rh and Pd in internal layers) and prevention of undesirable alloy formation. In this way the resulting catalyst exhibits higher activity and enhanced durability.

The use of automotive exhaust catalytic converters, during the last 20 years, in the control of atmospheric pollution from internal combustion engines has proved their serviceability and efficiency. However, the use of platinum group metals (PGM) as the active phase of the converters, makes their continuous improvement necessary, mainly for economic and environmental reasons. The main problem is related to the use of Rh, which is not only very expensive, but also very rare. The other PGM metals, Pt and Pd, are cheaper and they are available in greater amounts, but their continuously increased use makes them more expensive. On the other hand, catalytic converters suffer from poisoning and thermal ageing which makes their useful lifetime short and their replacement necessary. Consequently, catalysts which are active at low temperatures, and tolerant of high temperatures and poisons are needed, (e.g. K.C. Taylor, CHEMTHECH, 630 (1990); J.T. Kummer, J. Phys. Chem. 90, 4747 (1986).

The improvement of the activity of PGM catalysts depends mainly on their dispersion on support materials (washcoat), which are usually of high surface area, and on the possible presence of special additives and stabilizers. Although the activity enhancement due to an increase in dispersion of PGM automotive exhaust catalysts is well known, the effect of the nature of the washcoat has not been sufficiently examined. In recent years, however, Verykios and his coworkers (1987, 1988, 1989, 1989 a,b) and Vayenas and his coworkers (1988, 1988 a,b, 1989, 1990) have shown that the activity of metal crystallites can be significantly enhanced if these are dispersed on doped semiconductive carriers or on solid electrolyte materials, respectively.

In the former case, semiconductive metaloxides, such as TiO₂, are doped with cations of higher valence, such as W⁶⁺, Ta⁵⁺ and Sb⁵⁺, at low concentration levels. The doped materials are used as carriers in the formulation of metallic catalysts. As a result of an electronic interaction developing at the metal-semiconductor interface, which results in electron transfer from the support to the metal particles, the chemisorptive and catalytic properties of the metal surfaces are dramatically altered (Dopant-Induced Metal-Support Interactions or DIMSI phenomenon). Thus, the specific activity of Rh dispersed on higher valence doped TiO₂, in CO hydrogenation is enhanced by a factor of 20, in CO oxidation by a factor of 10, etc. Similar behavior has been observed over Pd, Ru and Ir. It has also been observed that metal particles dispersed on higher valence doped TiO₂ carriers exhibit enhanced resistance to sulfur poisoning.

In addition to the DIMSI phenomenon described above, the phenomenon of Non-Faradaic Electrochemical Modification of Catalytic Activity (NEMCA), developed by Vayenas and coworkers, is also applied towards the design of efficient automotive exhaust catalytic converters. The NEMCA phenomenon is based on the possibility of altering the work function of metallic or metal oxide catalysts by electro-chemical supply or withdrawal of ions to or from the surface by application of external potential in an electro-chemical cell of the type: reactants, electrode-catalyst/solid electrolyte/reference electrode. Such solid electrolytes are the yttria-stabilized zirconia (ZrO₂/8 mol% Y₂O₃ or YSZ), the ThO₂/8 mol% Y₂O₃, CeO₂ (La₂O₃), β''-Al₂O₃ etc. It has been observed recently that metallic catalysts supported on materials of high ionic conductivity exhibit significantly enhanced activity which is comparable to that exhibited under the NEMCA phenomenon, although there is no external ion pumping. Thus, an "intrinsic" NEMCA effect can be developed, resulting in significant enhancement of catalytic activity. This latter concept is applied towards the design of exhaust catalysts.

### Summary of the invention

In this invention a more active catalytic conventer is described, as developed by application of the above concepts. The catalyst consists of Rh supported on W⁶⁺-doped-TiO₂, Pd supported on Y₂O₃-doped-ZrO₂ and Pt supported on γ-Al₂O₃. These catalyst-support pairs were found to give maximum activity for the three-way reactions of the type:
Oxidation of CO to CO₂
Oxidation of light hydrocarbons (HC) to CO₂
Reduction of NOₓ to N₂

These reactions are of great importance not only in automotive exhaust gas treatment but also for the purification of the emissions containing CO, HC and NOₓ of many chemical industries and thermal power generating facilities.

The three metal-support pairs described above are formulated in a macroscopically uniform catalyst which can then be used either in the form of pellets or can be applied as a washcoat on the walls of the channels of a monolithic honeycomb type substrate. This configuration is hereafter denoted as "1-layer/3-parts" catalyst. The three metal-support pairs described above can also be formulated as three separate layers supported on monolithic honeycomb type substrates in the following sequence:
- upper layer:: Pt/γ-Al₂O₃ (CeO₂, La₂O₃)
- intermediate layer:: Rh/W⁶⁺-doped-TiO₂ (CeO₂, La₂O₃)
- lower layer:: Pd/Y₂O₃-doped-ZrO₂ (CeO₂, La₂O₃)
where the lower layer is in contact with the monolithic substrate, which is made from cordierite or other suitable, e.g. metallic, material and where CeO₂ and/or La₂O₃ are added as catalyst promoters which is well known to practitioners of this art. This novel configuration is hereafter denoted as "3-layer" catalyst.

The two catalysts described above, i.e. the "1-layer/3-parts" catalyst and the "3-layer" catalyst, are new and their main differences from all catalysts of similar type are described in detail below in the following illustrative, but not limiting "Detailed description of specific embodiments" section.
- Figure 1:: Maximum measured CO oxidation rate to CO₂ expressed as turnover frequency (s⁻¹), i.e., molecules CO reacting per surface metal atom per s, for fifteen catalysts consisting of all combinations of Rh, Pd and Pt supported on five chosen supports.
- Figure 2:: Maximum measured C₂H₄ oxidation rate to CO₂ and H₂O expressed as turnover frequency (s⁻¹), i.e. molecules C₂H₄ reacting per surface metal atom per s for the fifteen catalysts of Figure 1.
- Figure 3:: Maximum measured NO reduction rate to N₂ by CO, expressed as turnover frequency (s⁻¹), i.e. molecules NO reacting per surface metal atom per s for the fifteen catalysts of Figure 1 and 2.
- Figure 4:: Effect of catalyst support on the light-off temperatures of CO oxidation, C₂H₄ oxidation, NO reduction and N₂ production at the stoichiometric point of operation.
- Figure 5:: Schematic representation of (a) a current state-of-the-art type catalyst with the usual γ-Al₂O₃ support (b) the new "1-layer/3-parts" catalyst where each of the three noble metals is supported on the appropriately chosen support and the three supports are mixed and (c) the new "3-layer" catalyst where each of the three metals is supported on the appropriately chosen support and the three supports are coated on the substrate in the sequence shown in the Figure.
- Figure 6:: Comparative results of the light-off temperatures of the three catalysts of Figure 5 at the stoichiometric point of operation.

In this invention, a more active automobile catalytic converter is described, as developed by application of the metal-support interaction concepts described in the "background of the invention" section. First, the optimal pairs of each metal-support are specified in terms of CO oxidation, light hydrocarbons oxidation and NOₓ reduction activity (see example 1). Five different supports were examined; two inerts: TiO₂ (rutile) and SiO₂, the usual commercial support: γ-Al₂O₃, and two modified: YSZ and TiO₂ doped with W⁶⁺ cations of variable concentration. Three PGM were examined; Pt, Rh and Pd. It was found in this work, that the nature of the support has a great effect on the activities of the metals. The following order of decreasing activity, for the above three reactions was abserved:
- Rh:: W⁶⁺-doped TiO₂ > YSZ > γ-Al₂O₃, SiO₂ > TiO₂
- Pd:: YSZ > γ-Al₂O₃ > W⁶⁺-doped TiO₂, SiO₂ > TiO₂
- Pt:: SiO₂ > γ-Al₂O₃, YSZ > TiO₂ > W⁶⁺-doped TiO₂

It is concluded that if a single support is selected for all metals, this must be the YSZ (NEMCA support). This formulation of an automotive exhaust catalytic converter gives better results as compared to a formulation in which a commercial support is used (see example 2a).

The results concerning the activity of metal-support pairs gave to us an idea to use separate supports for each PGM in order to maximize total activity. Thus, Rh is supported on W⁶⁺ doped TiO₂, Pd on YSZ and Pt on γ-Al₂O₃. This idea was applied to monolithic structures forming a catalyst containing three layers of washcoats, each washcoat containing a different PGM. A three-way catalytic converter formulated in this manner exhibits better activity than the commercial one, which has the same amount of PGM but supported on γ-Al₂O₃ (see example 2b). The proposed order of placing of the different layers is the following: first the layer containing Pd, dispersed on YSZ, the intermediate layer containing Rh, dispersed on W⁶⁺ doped TiO₂, and the upper layer containing Pt dispersed on γ-Al₂O₃. This order maximizes the resistance of the catalyst against poisons, because of protection of Rh and Pd, which are sensitive to poisons, and decreases the thermal ageing because of prevention of undesirable alloy formation between Pt and Pd.

This invention formulates a new catalyst which requires smaller quantities of PGM in order to achieve the same activity as the commercial catalyst and it presents, in addition, longer lifetime. The present invention relates to convertion of automotive emissions, and, more generally, to three-way reactions of the type:
° Oxidation of CO to CO₂
° Oxidation of light hydrocarbons (HC) to CO₂
° Reduction of NOₓ to N₂,
which could also interest many industries which have problems of purification of emissions containing CO, HC and NOₓ.

The present invention, e.g. the three-way catalyst which has this type of washcoat:
- upper layer :: Pt/γ-Al₂O₃ (CeO₂, La₂O₃)
- intermediate layer:: Rh/W⁶⁺-doped TiO₂ (CeO₂, La₂O₃)
- lower layer:: Pd/YSZ (CeO₂, La₂O₃)
supported on monolithic substrates from cordierite or other suitable, e.g. metallic, support, is a new catalyst and the main differences from all catalysts of similar type are the following:
1. The catalyst proposed from Hegedus and his coworkers (e.g. J.C. Summers and L.L. Hegedus, J. Catal., 51, 185 (1978); L.L. Hegedus, and J.J. Gumbleton, CHEMTECH, 630 (1980)) consists of rings of Pt placed into the outer, Rh into the intermediate and Pd into the internal ring. The results showed sizable improvement in both steady-state and light-off temperature performance when the catalyst has an outer layer of Pt and an inner shell of Pd. These catalysts were pellet-type and the support was uniform γ-Al₂O₃. Thus the main differences with this invention are the non-uniform support (γ-Al₂O₃, W⁶⁺-doped TiO₂ and YSZ; each containing the more suitable PGM) and that these ideas are applied to monolithic types of support.
2. Serious differences also exist with the catalyst proposed by Nippon Molybdenum KK, Japanese Appl. 4/161,249, which uses unique support (active Al₂O₃) for all metals, supported on monolith. They place first Pd and possibly Ce oxide, they rest a layer without precious metals, and then they place on the upper layer Pt and/or Rh.
3. The catalyst proposed by Nissan Motor Co. LTD consists of a monolithic support coated either with a metal oxide containing Pt and/or Pd, itself coated with another metal oxide coating layer containing Rh (two layers-Japanese Appl. 4/161,248 ) or a first layer of Al₂O₃ containing Pt and/or Pd, a second layer of Al₂O₃ containing Rh supported or Zr oxide, and a third layer of Al₂O₃ containing Ir (uniform washcoat-Japanese Appl. 4/74,534).
4. Many other inventions (e.g. Nippon Shokubai Co. LTD, European Appl. 494,591 A; Agency of Ind. Sci. Tech., Japanese Appl. 4/78,442; Babcock-Hitachi K.K., Japanese Appl. 4/118,049; Osaka Gas Co. LTD, Japanese Appl. 4/161,230; Cateler Kogyo K.K., Japanese Appl. 4/87,627; Allied-Signal Inc., U.S. Patent 5,116,800; NGK Insulators LTD European Appl. 485,180 A; etc) present catalysts which contain TiO₂ and/or ZrO₂, but not in the form of the present invention (e.g. doped-TiO₂ or stabilized ZrO₂) neither using separate layers for PGM application. In these works, a better performance is presented against usual commercial catalysts containing PGM uniformily dispersed on γ-Al₂O₃. In the present invention, an optimum formulation of the new catalyst is presented, which exhibits superior performance as compared to similar types of catalysts.

The above differences make the present invention new and innovative. The technical improvements of the new catalytic converter for automobile emissions control, makes it more active than the existing ones by using optimal distribution of precious metals (Pt, Rh, Pd) within three separate washcoat layers consisting of different materials. Thus, the new catalyst, in order to meet the EEC emission standards, requires smaller quantities of noble metals. Since the cost of the noble metals accounts for approximately 50% of the cost of the converter, significant savings can be realized.

The following working Examples represent a more detailed description of the invention.

### Example 1

All possible combinations of metal and support were formulated into supported metal catalysts. The metals were Pt, Rh and Pd, and the supports were γ-Al₂O₃, SiO₂, TiO₂, TiO₂ doped with W⁶⁺ and YSZ. The deposition of the metal on the support was carried out by the method of wet impregnation which is well-known to practitioners of this art. The produced catalysts were dried, calcined and reduced under H₂ flow at 400°C for 2hrs. In all cases the metal loading was 0,5%. The activity of these catalysts was studied for the reactions: CO oxidation, C₂H₄ oxidation and NO reduction, which represent the reactions taking place within a catalytic converter, under identical conditions.

The investigation of the activity of each metal was carried out by means of kinetic studies in a CSTR-type reactor. The reactor is fed with mixtures of CO/O₂/He, C₂H₄/O₂/He or NO/CO/He. The mixture composition and the temperature are the main independent variables. Gas analyses are made by means of GC and IR instruments. Specific reaction rates are computed based on the analysis of the feed and product mixtures.

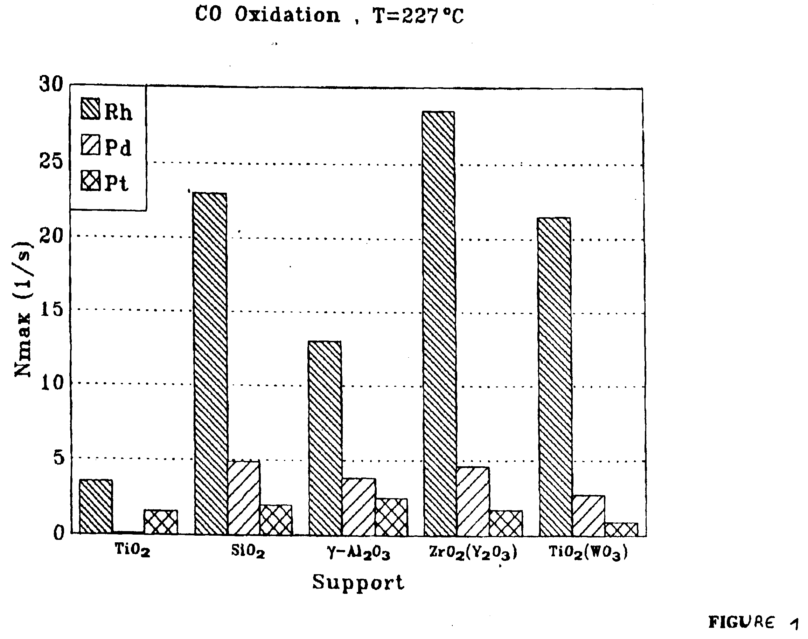

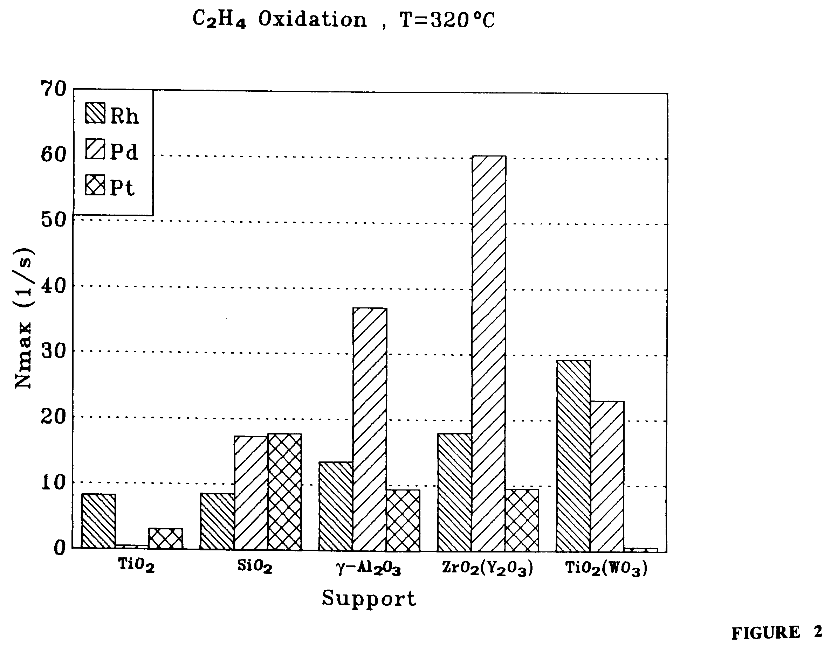

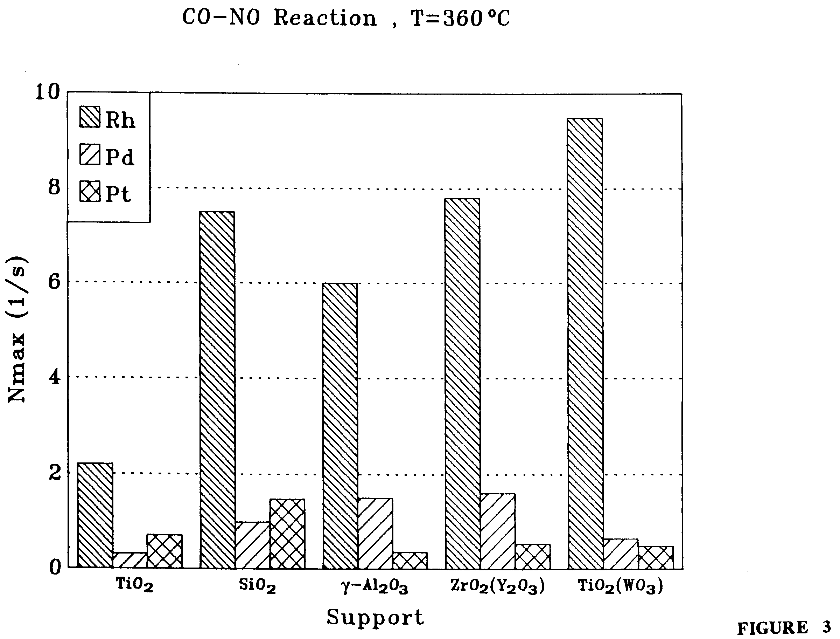

Results of this work are shown in Figs. 1, 2 and 3, which refer to CO oxidation, C₂H₄ oxidation and NO reduction, respectively. In these figures the maximum production rate of CO₂, abtained over different metals dispersed on different supports are given. The rate of production of CO₂ is reported in the form of turnover frequency to make more fundamental comparisons.

Figs. 1-3 show that the supports have a great influence on the activity of all metals. A common conclusion from these results is that the activity of PGM is enhanced if these are supported on YSZ. On the other hand, a strong effect of doping of TiO₂ with W⁶⁺ cations is presented on Rh for all three reactions. This effect is lower on Pd and negative on Pt.

### Example 2

A three-way monolithic catalyst was prepared as follows: Cordierite monolith structure, containing 64 square channels per square centimetre (supplied by Corning Glass) were coated with different washcoats.

Washcoat slurries were prepared by mixing the support powder with water in a high-speed blender for a certain period of time. Solid concentration, temperature and pH play an important role in deposition procedure as is wellknown to practitioners of this art. Monolith specimens with a length of 5 mm and 16 mm diameter were provided with a washcoat by impregnation, followed by drying, calcination and reduction as described above. The PGM phase was applied by direct impregnation by filling the monolith channels once with the solution of PGM precursors or, alternatively, by simultaneous application together with the support.

The activity of the monolithic catalysts was measured in an appropriate apparatus. The monolithic piece is placed in the middle of a quartz tube which is placed in a furnace. The reactor was fed with gas mixtures which simulate the compositions of common car emissions and contain CO, C₂H₄, NO and O₂, diluted in He. The concentration of O₂ is lower, higher, or equal to the stoichiometric one, required for complete combustion of CO and C₂H₄. The catalyst contains all the necessary active phases in order to present a three-way operation. The gas analysis is made by means of gas chromatography.

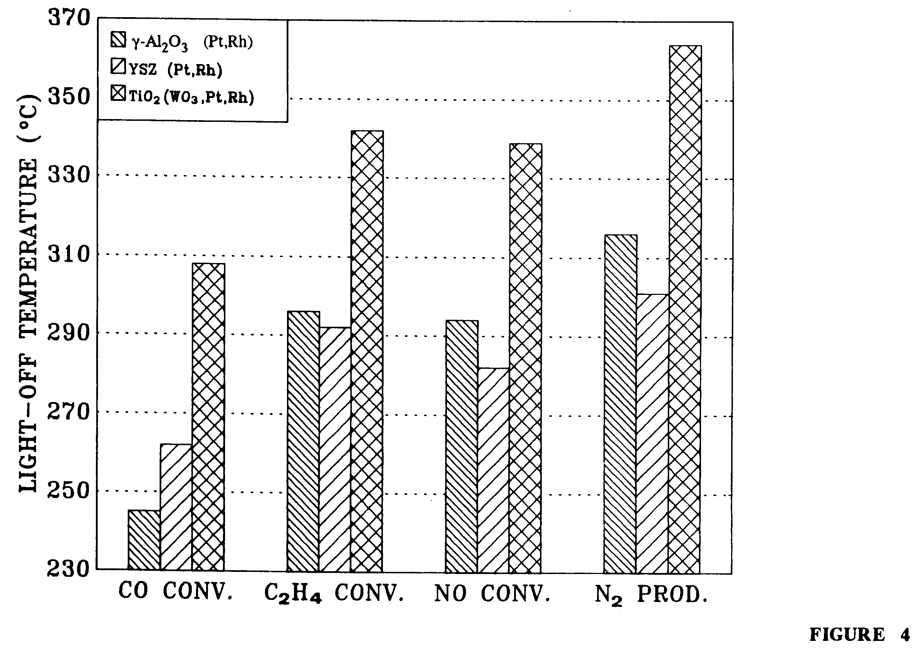

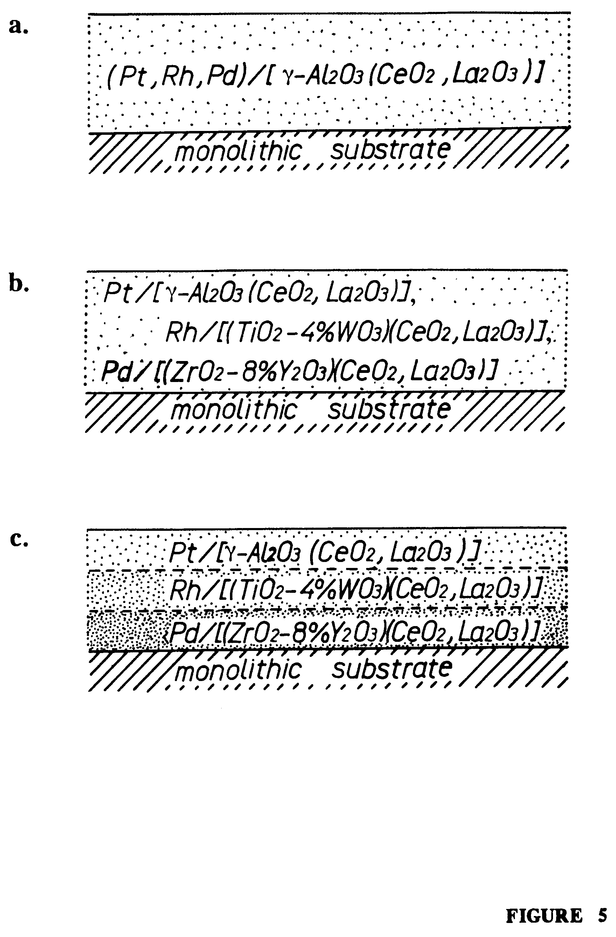

The convertion of each pollutant is measured at different temperatures. In all cases of NO reduction the yield of N₂ is also measured. As a measure of characteristic activity, the light-off temperature, T₅₀, which is defined as the temperature of the inlet gas at which the conversion of the reactant is 50%, is defined.
a) At first, we examined the activity of monolithic catalysts consisting of a single support, with∼25% washcoat, which had 0,5% Pt and 0,1% Rh. In this manner tested the influence of the supports: YSZ, W⁶⁺-doped TiO₂ and the commercial one, γ-Al₂O₃ (8% CeO₂). The activity of these catalysts is shown in Fig. 4. The catalyst prepared with the commercial washcoat (γ-Al₂O₃) presents lower light-off temperature in CO oxidation, but higher in all other reactions, namely C₂H₄ oxidation, NO reduction and N₂ production. On the other hand, the catalyst which employs YSZ as the washcoat material shows lower light-off temperatures, i.e. higher activity for all reactions except CO oxidation. On the contrary, the W⁶⁺-doped TiO₂ support presents the worse behavior, with higher light-off temperatures in all reactions, apparently due to its negative effect in Pt activity which is contained at higher quantities than Rh. Subsequently, the YSZ support should be prefered as a single washcoat material, compared to the others examined here. It must also be emphasized that the dispersion of the metals on YSZ and W⁶⁺-doped TiO₂ is lower than that on γ-Al₂O₃. The despersion can be increased using other preparation procedures and this will result in even higher activity of the catalysts.
b) In order to examine the inventive idea of using separate supports for each PGM, three different monolithic catalysts have been prepared and tested: The first configuration (Fig. 5a), which represents a current state-of-the-art type catalyst, was prepared with all PGM dispersed on γ-Al₂O₃ (6% CeO₂, 2% La₂O₃). The second configuration (Fig. 5b), which represents the new "1-layer/3-parts" catalyst, was prepared containing the same quantity of PGM. In this catalyst, Pt was dispersed on γ-Al₂O₃, Rh on W⁶⁺-doped TiO₂ and Pd on YSZ. The three supports with the appropriate metals were well-mixed and then applied onto the monolithic substrate. Finally, a third configuration was prepared (Fig. 5c), which represents the new "3-layer" catalyst and contained the same quantity of PGM. This catalyst had three layers of different washcoats with the three PGM dispersed in the appropriate support. In the inner part we place YSZ which contains Pd, in the imtermediate layer we placed W⁶⁺-doped TiO₂ which contained Rh, and in the outer layer the commercial support (γ-Al₂O₃, 6% CeO₂, 2% La₂O₃) which contained Pt. The application of the wash coats was done succesively, following all the stages, i.e., impregnation, drying and calcination. All these catalysts contain∼34% total washcoat by weight of monolith and 0,145% Pt, 0,160% Pd, 0,039% Rh by weight of total washcoat.

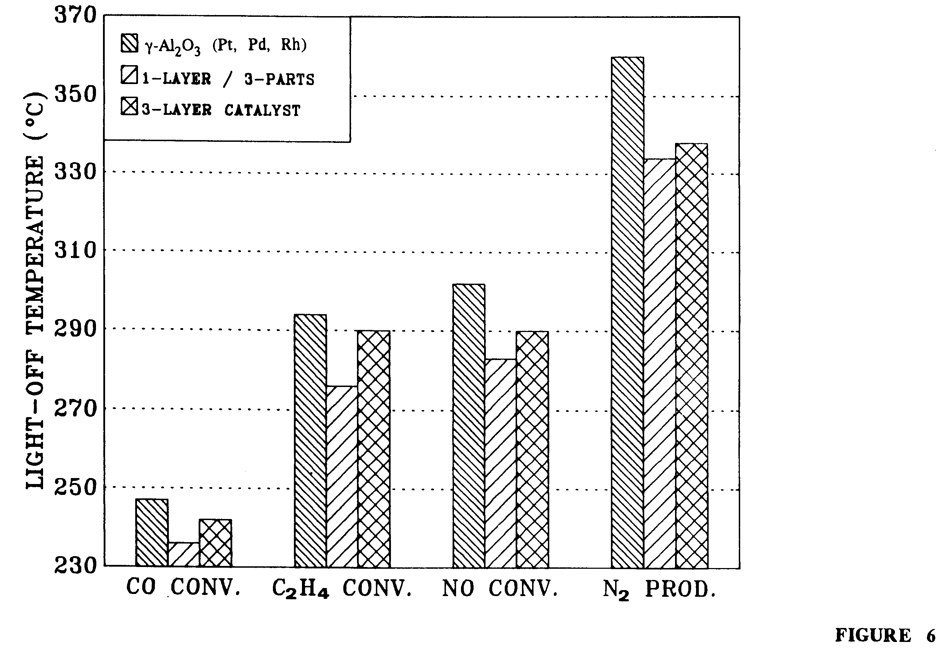

The activity of these catalysts in terms of their light-off temperature, T₅₀, is presented in Fig. 6. It is clearly shown that the catalysts with modified supports are more active than this prepared with the commercial support, γ-Al₂O₃. The "1-layer/3-parts" catalyst exceeds in activity the "3-layer" one, at least in these particular conditions of experiment. However, if we take into account the increased resistance to poisoning of the three-layer catalyst, this must be the correct direction in the development of improved automotive catalysts. The issue of reduced dispersion of the metals dispersed on YSZ and W⁶⁺-doped TiO₂ must again be pointed out. By proper preparation of Pd/YSZ and Rh/W⁶⁺-doped TiO₂ washcoats, their activity can be improved significantly. Many techniques for improving the dispersion of supported metal catalysts are known.

### Literature cited

E.C. Akubuiro, and X.E. Verykios, J. Catal., 103, 320 (1987).
E.C. Akubuiro, and X.E. Verykios, J. Catal., 113, 106 (1988).
E.C. Akubuiro, and X.E. Verykios, J. Phys. Chem. Solids, 50, 17 (1989)
E.C. Akubuiro, T. Ioannides and X.E. Verykios, Appl. Catal., 46, 297 (1989a).
E.C. Akubuiro, X.E. Verykios and T. Ioannides, J. Catal., 116, 590 (1989b).
S. Bebelis and C.G. Vayenas, J. Catal., 118, 125 (1989a).
S. Bebelis and C.G. Vayenas, J. Catal., 118, 147 (1989b).
J.T. Kummer, J. Phys. Chem., 90, 4747 (1986).
K.C. Taylor, CHEMTECH, Sept, 630 (1990).
C.G. Vayenas, S. Bebelis and S. Neophytides, J. Phys. Chem. Lett., 92, 5083 (1988).
C.G. Vayenas, S. Bebelis, S. Neophytides and I.V. Yentekakis, Appl. Phys. (A), 49, 95 (1989).
C.G. Vayenas , S. Bebelis and S. Ladas, Nature, 343, 625 (1990).
C.G. Vayenas, S.I. Bebelis, I.V. Yentekakis and P.E. Tsiakaras, European Patent Appl. No. 0 480,116 Al.
L.L. Hegedus and J.J. Gumbleton, CHEMTECH, 630 (1980).
J.C. Summers and L.L. Hegedus, J. Catal., 51, 185 (1978).
Nippon Molybdenum KK. Japanese Appl. No. 4/161,249.
Nissan Motor Co. LTD, Japanese Appl. No. 4/161,248.
Nissan Motor Co. LTD, Japanese Appl. No. 4/74,534.
Nippon Shokubai Co. LTD, European Appl. No. 494,591 A.
Agency of Ind. Sci. Tech., Japanese Appl. No. 4/78,442.
Babcock-Hitachi K.K., Japanese Appl. No. 4/118,049.
Osaka Gas Co. LTD, Japanese Appl. No. 4/161,230.
Cateler Kogyo K.K. Japanese Appl. No. 4/87,627.
Allied-Signal. Inc., U.S. Patent No. 5,116,800.
NGK Insulators LTD, European Appl. No. 485,180 A.

## Claims

1. Catalyst for the automotive exhaust treatment and the treatment of industrial and power generation stations waste gases by three-way reactions of the type of CO and light hydrocarbons oxidation and reduction of NO consisting of well-dispersed Rh, Pd and Pt each supported on a different catalyst support so that the following three pairs of dispersed precious metal-support material are formed:
Pt/γ-Al₂O₃ (CeO₂, La₂O₃)
Rh/W⁶⁺-doped-TiO₂ (CeO₂, La₂O₃)
Pd/Y₂O₃-doped-ZrO₂ (CeO₂, La₂O₃)
wherein either the said three precious metal-support pairs are well mixed and formulated in a macroscopically uniform catalyst which can then be used either in the form of pellets or can be applied as washcoat on the walls of the channels of a monolithic honeycomb type substrate (1-layer/3-parts catalyst) or each of said metal-support pairs is formulated as a separate washcoat-layer, the three washcoat-layers being supported on monolithic honeycomb substrates in the following sequence:
upper layer: Pt/γ-Al₂O₃ (CeO₂, La₂O₃)
intermediate layer: Rh/W⁶⁺-doped-TiO₂ (CeO₂, La₂O₃)
Lower layer: Pd/Y₂O₃-doped-ZrO₂ (CeO₂, La₂O₃)
wherein the lower layer is in contact with the monolithic substrate, which is made from cordierite or other suitable, e.g. metallic, material (3-layer catalyst) and
wherein CeO₂ and/or La₂O₃ are added as catalyst promoters.

2. Use of the catalyst of claim 1, for treatment of automative exhaust gases.

3. Use of the catalyst of claim 1 for the treatment of industrial and power plant emission gases.

## Patentansprüche

1. Ein Katalysator zur Bearbeitung von Automobilabgasen und zur Bearbeitung von Emissionen von Industrie- und Energieerzeugungsanlagen durch drei-Weg Reaktionen des Typs Oxidation von CO und leichten Kohlenwasserstoffen und der Reduktion von NO bestehend aus gut dispersiertem Rh, Pd und Pt, aufgetragen auf jeweils verschiedene Trägersubstanzen, so daß folgende drei Paare von dispersiertem Edelmetall-Trägermaterial geformt werden:
Pt/γ-Al₂O₃ (CeO₂, La₂O₃)
Rh/W⁶⁺-verstärkt-TiO₂ (CeO₂, La₂O₃)
Pd/Y₂O₃- verstärkt -ZrO₂ (CeO₂, La₂O₃)
wobei entweder die angeführten drei Paare aus Edelmetall-Trägersubstanzen gut gemischt und in einen makroskopisch uniformen Katalysator formuliert sind, welcher dann entweder in Form eines Granulats benutzt wird oder als Beschichtung auf die Wände von Kanälen in einem monolithischen wabenartigen Substrat (1-Schicht/3-teiliger Katalysator) aufgetragen werden kann, oder jedes der angeführten Paare aus Metall-Trägersubstanzen als separate aufwaschbare Lagen der Beschichtung formuliert ist, wobei die drei Lagen der Beschichtung auf monolithischen wabenartigen Substraten untergebracht sind in folgender Reihenfolge:
obere Schicht: Pt/γ-Al₂O₃ (CeO₂, La₂O₃)
Zwischenschicht: Rh/W⁶⁺-verstärkt-TiO₂ (CeO₂, La₂O₃)
untere Schicht: Pd/Y₂O₃- verstärkt -ZrO₂ (CeO₂, La₂O₃)
wobei die untere Schicht in Kontakt mit dem monolithischen Substrat ist, welches aus Kordierit oder anderem geeigneten, z.B. metallischem Material (3-Schichten Katalysator) besteht und
wobei CeO₂ und/oder La₂O₃ hinzugefügt werden als Aktivatoren des Katalysators.

2. Die Benutzung des Katalysators nach Anspruch 1 zur Bearbeitung von Automobilabgasen.

3. Die Benutzung des Katalysators nach Anspruch 1 zur Bearbeitung von Emissionen von Industrie- und Energieerzeugungsanlagen.

## Revendications

1. Un catalyseur pour le traitement des gaz d'échappement automobiles et le traitement des gaz résiduaires industriels ou provenant de centrales thermiques, par des réactions à trois voies du type de l'oxydation du CO et d'hydrocarbures légers et de la réduction du NO, consistant en Rh, Pd, et Pt dispersés, chacun supporté sur un support de catalyseur différent si bien que les trois combinaisons métaux précieux dispersés-matériau support suivantes sont formées :
Pt/ g-Al₂O₃ (CeO₂, La₂O₃)
Rh/ TiO₂ dopé par W⁶⁺ (CeO₂, La₂O₃)
Pd/ ZrO₂ dopé par Y₂O₃ (CeO₂, La₂O₃)
où les trois combinaisons métaux précieux métal-support citées ci-dessus sont intimement mélangées et formulées dans un catalyseur macroscopiquement uniforme qui peut être utilisé soit sous forme de pastilles soit appliqué comme revêtement des parois des canaux d'un substrat monolithique de type nid d'abeilles (catalyseur 〈〈 1 couche - 3 compartiments 〉〉) ou où chacune de ces trois combinaisons métal-support citées ci-dessus est formulée en une couche séparée, les trois couches étant déposées sur un substrat monolithique de type nid d'abeilles dans la séquence suivante:
couche supérieure: Pt/ g-Al₂O₃ (CeO₂, La₂O₃)
couche intermédiaire: Rh/ TiO₂ dopé par W⁶⁺ (CeO₂, La₂O₃)
couche inférieure: Pd/ ZrO₂ dopé par Y₂O₃ (CeO₂, La₂O₃)
où la couche inférieure est en contact avec le substrat monolithique, lequel est constitué de cordiérite ou tout autre matériau idoine (catalyseur 〈〈 3-couches 〉〉), par exemple métallique et
où CeO₂ et/ou La₂O₃ sont ajoutés comme promoteurs du catalyseur.

2. L'utilisation du catalyseur de la revendication 1 pour le traitement des gaz d'échappement automobiles.

3. L'utilisation du catalyseur de la revendication 1 pour le traitement des gaz résiduaires industriels ou provenant de centrales thermiques.
